(19) Europäisches Patentamt
European Patent Office
Office européen des brevets

(11) **EP 2 204 929 A1**

(12) **EUROPEAN PATENT APPLICATION**

(43) Date of publication:
**07.07.2010 Bulletin 2010/27**

(51) Int Cl.:
*H04B 14/04* (2006.01)    *A61B 5/0428* (2006.01)

(21) Application number: **09180327.0**

(22) Date of filing: **22.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **22.12.2008 IT RM20080689**

(71) Applicant: **IRCCS Centro Neurolesi "Bonino-Pulejo"**
**98124 Messina (IT)**

(72) Inventors:
• **Lanzafame, Pietro**
  **98158 Messina (IT)**
• **Zona, Paolo**
  **98135 Messina (IT)**
• **Galli, Giovanni**
  **98186 Messina (IT)**
• **Bramanti, Placido**
  **98121 Messina (IT)**

(74) Representative: **Cinquantini, Bruno et al**
**Notarbartolo & Gervasi S.p.A.**
**Corso di Porta Vittoria, 9**
**20122 Milano (IT)**

(54) **Signal acquisition and conditioning system, specifically for bioelectric signals**

(57)    A signal acquisition and conditioning system, specifically for bioelectric signals, comprising an acquisition and pre-conditioning device 2 comprising a chip adapted to process the input bioelectric signals in a differential manner, with a low use of additional circuitry.

The system further comprises means for generating a sinusoidal-wave clock signal and means for converting said sinusoidal wave into a clock square-wave.

Fig. 4

**Description**

**Field of the invention**

The present invention relates to a signal acquisition and conditioning system, especially for bioelectric signals.

**State of the art**

For an acceptable bioelectric signal acquisition and conditioning, an acquisition device for bioelectric signal should exhibit high resolutions, low noise, high rejection of common mode interferences, among the requirements.

If the device is intended for a hand-held application, low consumptions, low costs and high compactness are to be added to the requirements mentioned above.

Over time, various techniques and architectures for amplifying, treating and converting bioelectric signals have been developed.

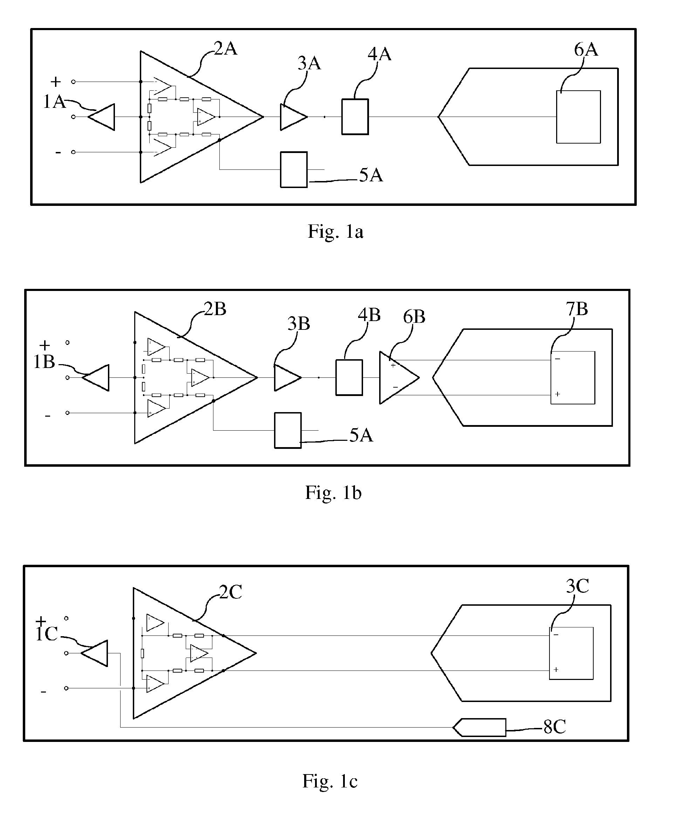

Figures 1a, 1b and 1c show simplified examples of the most common logic functional block diagrams of respective acquisition and pre-conditioning devices, also called front-end devices, adapted to be integrated in respective signal conditioning devices offered by the known art.

In particular, the first simplified diagram in figure 1a shows the most used logic functional architecture of the known art. The balanced bioelectric signal is amplified for no more than ten times and made unbalanced by the instrumentation amplifier contained in the block 2A. Block 3A provides for the further gain required, which typically amounts as a whole to about 1000 times. The limitation of the bandwidth is typically performed by a first-order, passive low-pass filter 4A, which may also be integrated in the reaction network of the gain block 3A. The feedback loop depending on the low-pass filter block 5A serves the function of high-pass filtering and controlling the working point of the differential instrumentation amplifier 2A. The frequencies of the above shown filters are obviously fixed and may not be modified while designing: at most it is possible to choose among two or three fixed settings, mechanically or electromechanically selectable. The active control circuit of the potential imposed to the patient's skin is carried out by another closed loop system depending on the inverting gain block 1A. The conversion to digital form is typically performed by an analog-to-digital converter (ADC) 6A of the SAR type (Successive Approximation converter), i.e. at successive approximations, which normally has a resolution varying from a minimum value of 8 bits to a maximum value of 18 bits and a maximum sampling frequency of some hundreds of kHz. Although this type of architecture is widely used, it has several limits. The resolution offered by the known art is not optimal because it requires a high amplification factor quantifiable between a hundred and a thousand of times which, especially for the type of the considered signals - the amplitude of which is of the order of some mVs - results in the use of many amplification stages, each bringing their contribution in terms of noise. Furthermore, these amplification stages require a large amount of passive precision components, such as RP resistors for gain adjustment, which condition increases the costs and tends to reduce the needed CMRR (Common Mode Rejection Ratio) because of minimum tolerances which however exist. Another limit is the low performance and the poor adjustability of the low-pass and high-pass filters 4A, 5B which are generally used.

For a more efficient filtering, the known art indicates a greater convenience in carrying out the digital filtering, that is attributing the filtering to the main Microprocessor or DSP (Digital signal processing) which instead should deal only with post-computing processing, thus subtracting processing resources.

In a hand-held application, a further limit is the high number of both active and passive components which are needed to implement the architecture shown: this means higher dimensions, consumptions and costs.

In figure 1b it is shown a second simplified diagram which is the evolution of the previously discussed system, offered by the known art as well.

This second diagram is a variant of the preceding diagram and comprises a delta-sigma, analog-to-digital converter (ADC) 7B instead of the SAR type converter. The delta-sigma AD converters allow to obtain resolutions between 16 and 24 bits, which allow to reduce the overall gain of the amplification section, but without solving the above-mentioned problems. Furthermore, using a driving stage 6B of the AD converter is required, which transforms the signal into the differential form, because the most efficient delta-sigma AD converters require a differential driving.

Figure 1 c shows another variant, which is an evolution of the diagram in figure 1 b. The signal is kept in the differential form during the amplification processes carried out by the amplification block 2C. A better performance in terms of noise and rejection of common mode interferences is thus obtained. A certain reduction of the amount of required components may also be achieved, but such a reduction is not satisfactory, especially when using hand-held devices.

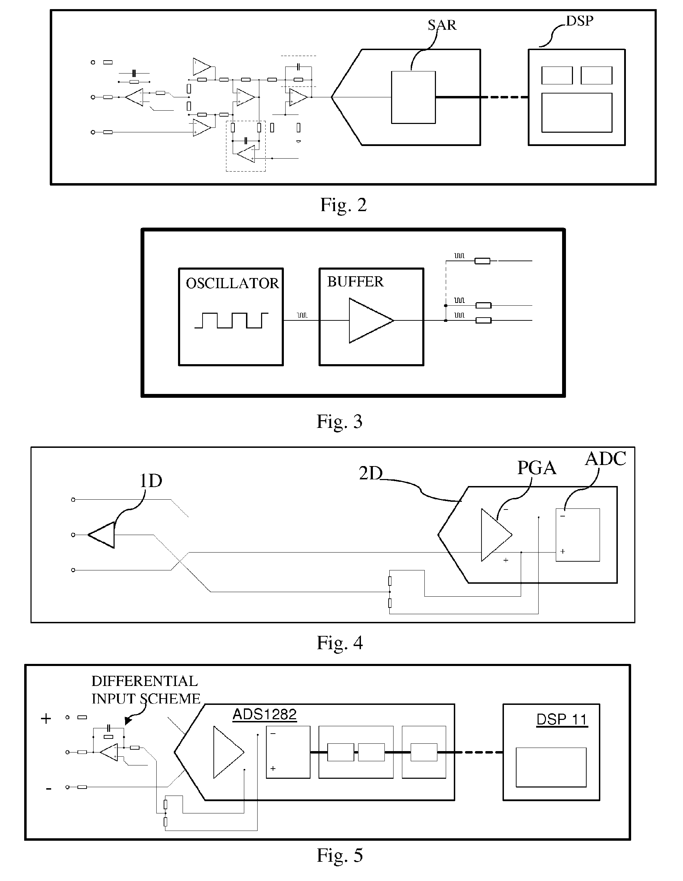

Figure 2 shows an example of a known complete conversion diagram in which there are an acquisition and pre-conditioning device as in figure 1 a and a DSP which carries out a post-conditioning comprising, in sequence, an instrumentation amplifier, an A/D converter of the SAR type, a DSP intended to perform the low-pass and high-pass filtering of the acquired signal.

Figure 3 shows an example of block diagram for generating a clock signal. Said diagram is often used in various known devices, among which the signal acquisition and conditioning devices as well.

Another problem of the acquisition and conditioning devices for bioelectric signals resides in that they comprise at least a clock generator for driving the inner circuitry. However, these generators cause interference problems with the amplification stages.

## Summary of the invention

It is an object of the present invention to provide a signal acquisition and conditioning system, specifically for bioelectric signals, adapted to solve the aforesaid problems.

It is an object of the present invention a signal acquisition and conditioning system, specifically for bioelectric signals, in accordance with claim 1, which comprises an acquisition and pre-conditioning device comprising a chip having:

- a differential input,
- an integrated input buffer,
- a variable gain amplifier,
- a high conversion accuracy, delta-sigma type AD converter with SNR up to 130Db and "no missing codes" resolution of 31 bits,

the chip being configured to acquire a signal in a differential manner, then amplify it and then digitize it.

It is adapted to acquire a wide range of bioelectric signals by means of electrodes or sensors of various kinds, and to amplify and pre-process them.

A device in accordance with the present invention may be used for measuring the bioelectric potentials generated by the EEG brain activity, EMG muscular activity or ECG cardiac activity.

It is a further object of the present invention to provide a method of generating the driving clock, adapted to solve the aforesaid problems.

Therefore, it is also an object of the present invention to provide a method for carrying out a signal acquisition and conditioning system, specifically for bioelectric signals, in accordance with claim 9.

Finally, it is a further object of the present invention to provide a method of generating the driving clock, adapted to solve the aforesaid problems.

Therefore, it is another object of the present invention to provide a method of generating a driving clock in accordance with claim 10.

The dependent claims disclose preferred embodiments of the invention, thus forming integral part of the present description.

## Brief description of the drawings

Further features and advantages of the invention will become more apparent from the following detailed description of preferred but non-limiting embodiments of a signal acquisition and conditioning system, specifically for bioelectric signals, shown by way of non-limiting example with the aid of the accompanying drawings, in which figures 1 to 3 refer to known devices, while the other figures show the invention:

Figures 1a, 1b and 1c show simplified electric diagrams of acquisition and pre-conditioning devices offered by the known art;

Figure 2 shows a simplified electric diagram of a complete acquisition and conditioning chain based on the diagram in figure 1a;

Figure 3 shows an electric block diagram of a clock generating and distributing system offered by the known art;

Figure 4 shows the electric diagram of an acquisition and pre-conditioning device in accordance with the present invention;

Figure 5 shows a complete conditioning chain comprising the electric diagram of the acquisition and pre-conditioning device in figure 4 and post-processing means;

Figure 6 shows a block diagram of a clock generator and distributor further included in an acquisition and conditioning device in accordance with the present invention;

Figure 7 shows a portion of the block diagram indicating the operation of a component contained in the electric diagram in figure 4;

Figure 8 shows an example of block diagram of a complete hand-held device comprising one or more acquisition and pre-conditioning devices of figure 4, the clock generator and distributor of figure 6 and the post-processing means;

Figure 9 shows a first portion of the block diagram of the preceding figure and partially corresponding to the electric diagram of the acquisition and pre-conditioning device of figure 4;

Figure 10 shows an electric diagram of a second portion of the block diagram of figure 8;
Figure 11 shows an electric diagram of a third portion of the block diagram of figure 8;
Figure 12 shows an electric diagram of a fourth portion of the block diagram of figure 8.

The same reference numbers and characters in the figures referring to the invention, i.e. figures 4 to 12, identify the same elements, blocks or components shown by blocks.

**Detailed description of a preferred embodiment of the invention**

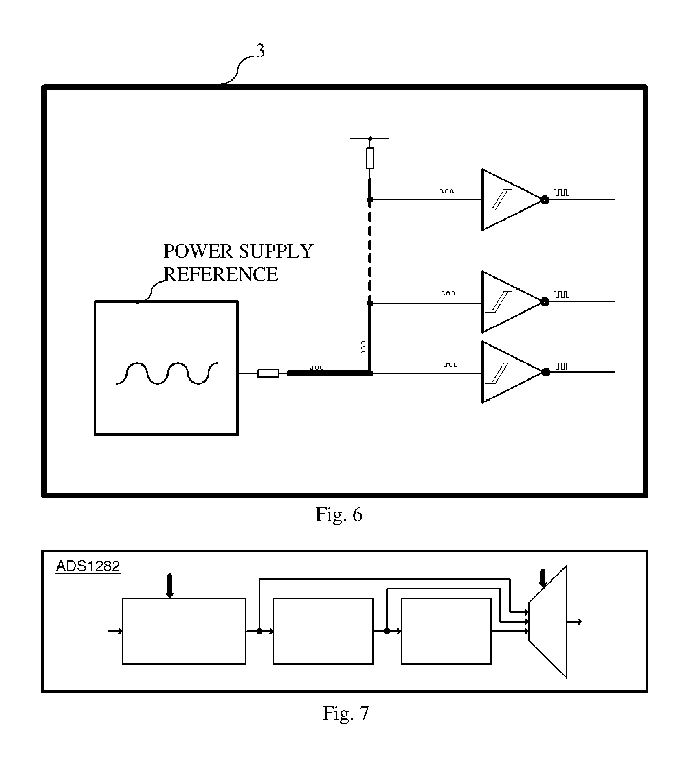

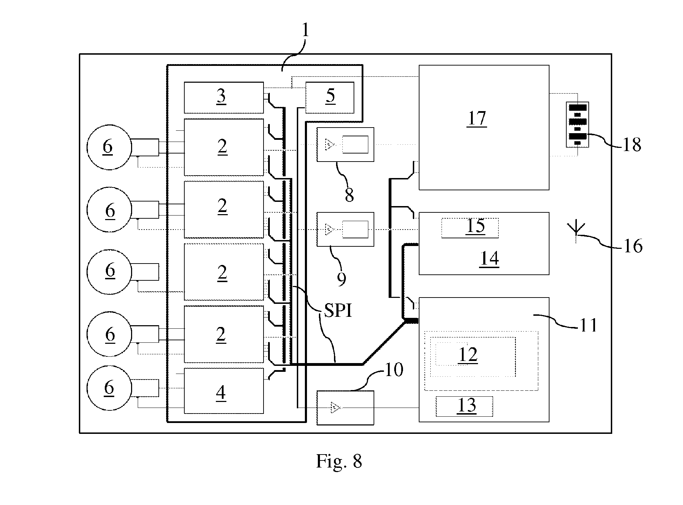

An example of acquisition and pre-conditioning device in accordance with the present invention comprises an ADS1282 chip 2D, as shown in figure 4, designed to acquire and process bioelectric signals in a differential manner.
Such a choice results from a very accurate selection from a plurality of chips offered by the known art.
Due to the proposed diagram providing for the use of such a chip, the external amplification stage may be eliminated in favor of an internal stage based on a very low noise, variable gain amplifier (PGA). The maximum reachable resolution increases to 31 bits and, on average, it keeps around 24 bits.
The passive precision components, present in devices of the known art, are eliminated thus reducing costs, dimensions, noise and tolerances. Furthermore, integrating a sophisticated structure of digital filtering, shown in figure 7, inside the same ADS1282 chip allows to free the central Microprocessor or central DSP, adapted to the post-conditioning, from these difficulties, and to use a greater number of processing resources.
Figure 5 shows a simplified diagram of the acquisition and pre-conditioning device. For getting the most of the potentialities of the aforesaid chip, another relevant innovation has been introduced: it refers to a clock 3 generating and distributing method. It provides that the clock signal is generated in sinusoidal form by a low phase noise discrete generator and then distributed in sinusoidal form and converted into square wave only physically close to the ADC converter integrated in such a chip ADS1282. A comparison may be made with the known generation and distribution technology while simultaneously observing figures 3 and 6. This innovation is to solve jitter and EMI (Electromagnetic Interference) problems afflicting the traditional square wave generation and distribution systems.
With reference to the overall electric diagram in figure 8, the above-mentioned block 2 (AD block) is logically grouped with further blocks 3, 4 and 5, as described hereinafter, to form a hardware block 1 defining a signal acquisition and conditioning system, comprising:

- at least one acquisition and pre-conditioning device 2, adapted to:

  - amplify and adapt the input signal impedance, the generation of a floating mass for driving an electrostatic screen,
  - convert the input signals from analog to digital and
  - square the required clock signal;
- a voltage supply generator 3 (refer to voltage supply gen) adapted to generate the supply and the reference voltages required for the operation of the other blocks/devices included in the hardware block 1;
- a driving driver 4 (common mode driving driver), adapted to drive the potential in a common mode;
- a master, sinusoidal clock signal generator 5 (Sinusoidal Clock Gen.).

With reference to figure 8, the acquisition and pre-conditioning device is integrated in block 2 (AD block). A variant of the suggested acquisition and conditioning device comprises, in addition to such a block 2, a processing section DSP 11 (CPU/DSP), a wireless interface 14 (RTX) e.g. of the ZigBee or Bluetooth type, a switching supply section 17 (Power management Switching) which is adapted to convert the electric power supplied by a network source or cell, e.g., a rechargeable lithium-ion cell 18, as shown in figure, so that the device is hand-held and more adapted to telemedicine applications.
The aforesaid hardware block 1 is adapted to bi-directionally communicate with the microcontroller or DSP 11, in which software libraries 12 for the management and interface of the DSP with the hardware block 1 are already charged, thus allowing an easy use with a large amount of compilers for microcontrollers and
DSP. Said DSP or microcontroller 11 is adapted to perform operations on the data acquired and pre-conditioned by the hardware block 1. It comprises a PLL clock generator 13 thereof, needed to generate the clock signals internally required from the main master clock.
Blocks 8, 9, 10 are means required for squaring the main sinusoidal clock generated by block 5 and provided with frequency multipliers or divisors, needed for providing a convenient clock frequency, in phase to the main frequency, to the devices in need thereof.
The electrodes or probes 6 or the like are adapted to detect bioelectric potentials on the skin or other parts of a body.
Transducer 7 is connected to the common mode driver 4, which provides for summing up the common mode voltages from each AD block 2 and for supplying the gain required to impose the common mode potential to the area object of the measurement of bioelectric potentials.

A communication interface 14 comprising an antenna 16 is connected through a communication bus to the data processing block CPU\DSP 11 and is adapted to receive and transmit via radio the acquired bioelectric signals, e.g., based on Bluetooth or ZigBee type protocols. Said interface comprises its PLL clock generator 15 needed to generate the signals internally required starting from the main master clock.

Finally, block 17 is a switching power supply of the whole device shown in figure 8 and described below.

Block 2

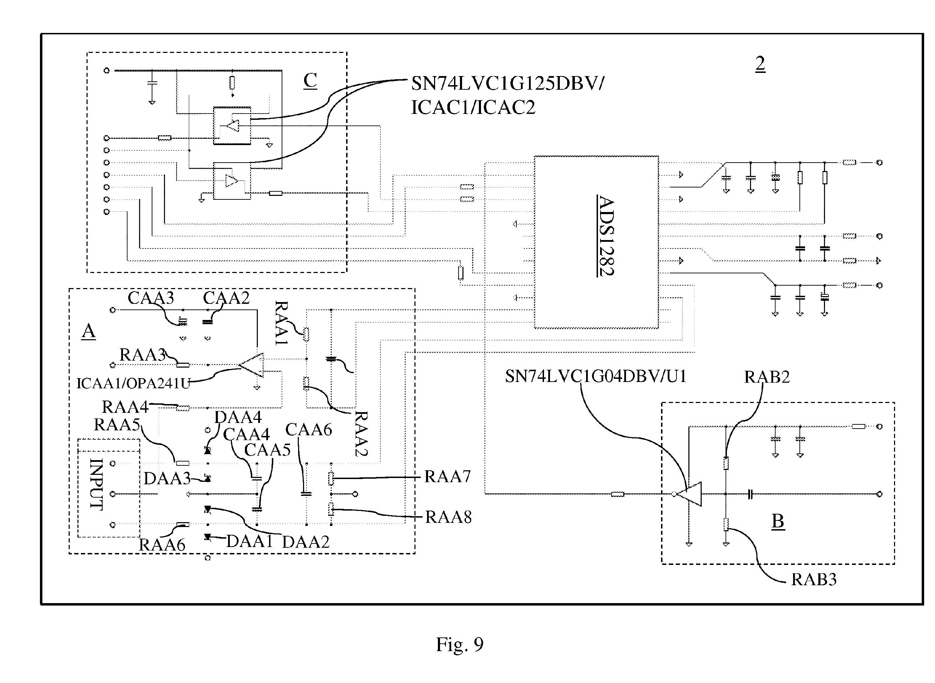

The acquisition and pre-conditioning device inserted in block 2, the simplified electric diagram of which is shown in figure 4 and the detailed electric diagram of which is shown in figure 9, comprises an input circuit A for the overvoltage protection, an analog-to-digital converter, a clock squarer B, a bus selector buffer C, various resistors and capacitors. With regards to the analog-to-digital converter (ADC), among the different integrated chips existing on the market, a chip ADS1282 comprising the following technical features has been selected:

- differential input,
- integrated input buffer,
- variable gain amplifier (PGA),
- a high conversion accuracy, delta-sigma type AD converter with SNR up to 130Db and "no missing codes" resolution of 31 bits,
- low consumptions,
- low-pass filters of SINC and FIR type and high-pass filters of IIR type and with functionalities manageable by using a set of internal registers.

In the suggested application, the acquisition block 2 is replicated four times so as to obtain four differential inputs.

The input section, enclosed into the dashed box A, comprises:

- schottky diodes DAA1-DAA4, as overvoltage protections;
- a low noise and consumption, single rail-to-rail operational OPA241 U for actively driving the mass potential, available in surface assembly packages S08.

Clock squarer B, i.e. the circuitry adapted to convert a sinusoidal wave into a squared wave with a logic level CMOS, is made of the diagram part which is enclosed in the dashed box B, comprising a single inverter gate SN74LVC1 G04DBV having fast rise and fall times and low consumptions. The component is available in a surface assembly package (smd) of the SOT23-5 type characterized by very compact dimensions.

Bus selector 3 is made of the circuit portion comprised in the dashed box C. Said device allows to connect more conversion blocks on the same bus. Said circuit portion C comprises two three-layers, single buffer gates of the SN74LVC1G125DBV type, having low consumptions. The selected components are advantageously available in a surface assembly package (smd) of SOT23-5 type characterized by very compact dimensions.

Hereinafter, the electric diagram and operation thereof of the acquisition and pre-conditioning device shown in block 2 is shown: the differential bioelectric signal detected by appropriate electrodes or sensors of various kind 6, enters the block 2 where it is applied by current limitation resistors RAA5, RAA6 and to the clamp diodes DAA1, DAA2, DAA3, DAA4 which serve the function of protecting the input of the operational amplifier, and thus of the whole device, from possible overvoltages, e.g. the overvoltages generated by defibrillator devices. and of limiting the current which may flow between the patient and the device itself. The capacitors CAA4, CAA5, CAA6 filter possible and undesired interferences at high frequency and serve also the function of anti-aliasing. The so treated signal is directly applied to the buffered differential inputs of the system on chips ADS1282. The configuration chosen advantageously has a high CMRR even if it does not require the use of precision resistors for adjusting the gain. At the output of the Buffer-PGA block contained into ADS1282, the common mode signal which is buffered by the operational block ICAA1 to provide for an active driving of the shielding, is taken trough resistors RAA1 and RAA2. The signal is also sent through resistor RAA3 to a junction and addition point of the driving driver 4 (common mode driver) where, by means of the operational amplifier ICD1 designed to supply an inverting gain, it is used for driving the skin potential, thus eliminating noisy fluctuations thereof, by means of a closed loop configuration. Using the skin potential control along with the direct driving of the AD converter in a differential manner, allows to maximize with a great advantage the CMRR, i.e. the rejection to the common mode interferences, of the device according to the invention. The sophisticated and flexible structure of digital filtering contained within the ADS1282, allows to use the anti-aliasing filter in a highly easy and not expensive manner, formed by RAA5, RAA6 and CAA4, CAA5, CAA6, the purpose of which is the elimination of the signals having equal or higher frequencies than the working one, that is 1 MHz, of the delta-sigma modulator contained in ADS1282. The filtered signal is then applied to the differential inputs of the ADS1282 and firstly buffered and amplified therefrom by a factor adjustable from 1 to 64 times (PGA) and then digitalized by a fourth order modulator $\Delta\Sigma$. The modulator block contains a system which, if the signal being measured passes the acceptance limits of the modulator itself, i.e. the occurrence of clipping phenomena, generates a high logic level on the digital line MOD_OUT _OF _RANGE, thus allowing to check the validity of the result of the sampling and control process on the gain selected in the PGA section. The sampled signal may be advantageously sent to the filtering structure inside the component, or may be not internally processed and sent through the digital lines: MODULATOR_CLK_OUT, MODULATOR_DATA_OUTO, MODULATOR_DATA OUT1 with a data rate of 1Mbps to an external DSP block, for carrying out possible customized filtering algorithms. If the conversion chip ADS1282 is configured through the software libraries 12 for performing the digital filtering inside the same chip, the sampled signal is then treated according to the block diagram in figure 7, comprising a decimator low-pass filter of SINC type with decimation factor adjustable from 8 to 128 times, defining the following transfer function:

$$| H_{(f)} |= \left[ \frac{\sin\left( \dfrac{N\, 4\pi f}{f_{clock}} \right)}{N \sin\left( \dfrac{4\pi f}{f_{clock}} \right)} \right]^5$$

A decimator low-pass filter of FIR type with constant decimation factor of 32 times and control on the coefficient bank follows, which allows to select between a linear phase response, by means of the symmetrical coefficient banks, and a minimum group delay, by means of asymmetrical coefficient banks. The FIR filter may exhibit a pass-band ripple of +-0.003Db only and a rejection of the out-of-band noise of 135Db. The next block of the filtering chain is a high-pass filter of IIR type, which may be excluded, the cut frequency of which is programmable between 0.1 and 10Hz. This type of filter advantageously allows to filter the bioelectric signal from unwanted artifacts such as electric potentials produced by slow muscular movements, without requiring the use of an external analog high-pass filter. At the output of the decimator filter SINC, the signal has a data rate ranging, in accordance with the chosen decimation factors, from 128 Ksps to 8 Ksps; the next step through the decimator filter FIR leads to a data rate ranging from 4 Ksps to 250 Sps. As noted from the block diagram in figure 4, the multiplexer advantageously allows to choose the required filtering among three possible combinations: SINC, SINC + FIR, SINC + FIR + IIR.

The converter ADS1282 may advantageously correct the internal and external offset and gain inaccuracies by a calibration procedure, to be carried out during the testing step of the device (a procedure managed moreover by the software libraries 12). The calibration coefficients are preserved into the internal registers and are used in a transparent manner when needed, for the correction of the output data. The so processed sampled signal is sent to the set of registers inside the ADS1282 where it is made available on four 8bit registers, for a total of 32 bits per sample, 31 of which are significant. The set of registers inside the converter ADS1282 may be accessed by a synchronous serial interface of SPI (Serial Peripheral Interface) type with digital lines: SPI_CLOCK, SPI_DATA OUT, SPI_DATA_IN. Other digital lines are also available, which facilitate the interface and speed of the data transfer process between the acquisition and pre-conditioning device and the microcontroller or DSP 11 which executes the software libraries (12): DATA_READY\ output line which indicates, by means of a low logic level, the end of the conversion process by actuating the interrupt mechanism managed by the software libraries 12 for the data transfer. SYNC_IN input line actuated by a high logic level, which resets the digital filters and begins a single conversion, which may be also used for synchronizing the conversion carried out with more devices in parallel; this line is managed by an accessory operation mode provided by the software libraries 12. MOD_OUT_OF_RANGE output line which, with a high logic level, indicates that the input limits of the modulator block contained in the ADS1282 have been passed; this line is used by the software libraries 12 for dynamically controlling the gain of the PGA section and controlling the validity of the acquired sample. POWER_DOWN\ input line actuated by a low logic level, allows the selection of the stand-by mode which offers an advantageously low consumption, typically 10µW, expected by the ADS1282; this line is used by software libraries 12 for controlling the supplying mode of the converter. If in the required application, a higher or lower number of differential input channels is needed, it is sufficient to provide the required number of blocks 2 related to acquisition and pre-conditioning devices and connect them, as shown, to the same bus. The function of selecting the bus SPI which is absent in the converter ADS1282 and necessary for sharing a unique bus SPI among several devices is served by the integrated ICAC1 and ICAC2 in the dashed box C. On the whole, it is preferable to share a unique bus SPI among no more than eight devices, because the maximum clock which the converter ADS1282 allows to be used for the bus SPI is of: SPI_CLOCK = MASTER_CLOCK \ 2, being MASTER_CLOCK = 4MHz, this leads to have a maximum available bandwidth of 2Mbit/s.

The sinusoidal clock signal generated by block 5, shown below, is transformed into a square wave signal with appropriate logic levels only locally and physically close to the requesting device, from the circuit the diagram of which may be seen in block 2, box B. The inverter gate U1 of the SN74LVC1G04DBV type autonomously provides for the squaring process, by adding a minimum phase noise and, for its operation, requiring a polarization network only at its input, consisting of RAB2 and RAB3.

Block 3

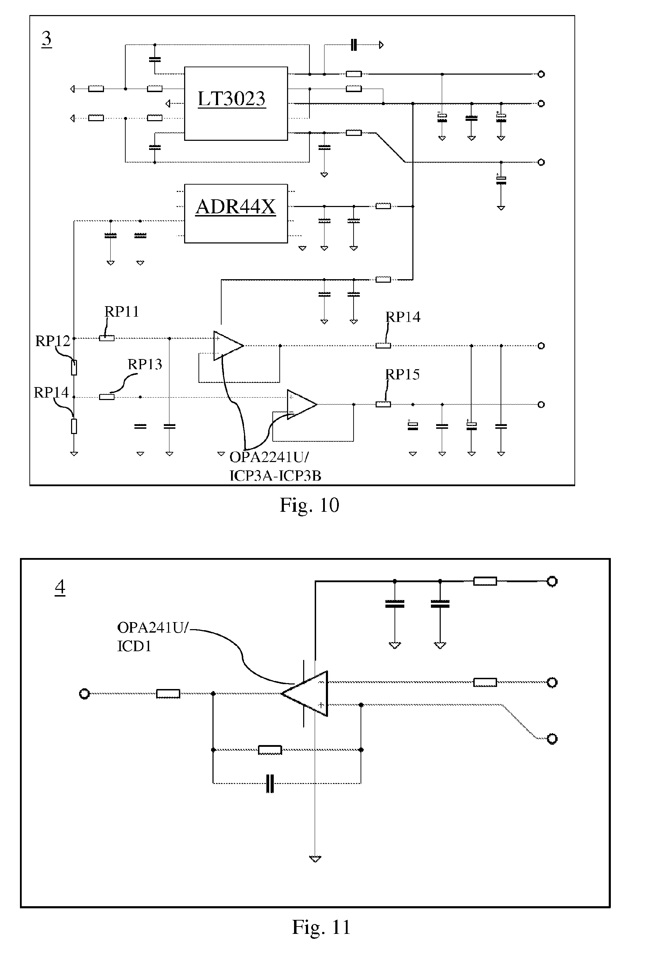

Block 3, the electric diagram of which may be seen in figure 10, comprises a double voltage regulator, a reference voltage generator, a dual operational amplifier, various resistors and capacitors. For the voltage adjustment, the double output regulator LT3023EMSE has been selected, which is characterized by low output noise, on average $20\mu V$ RMS from 10Hz to 100KHz, low consumptions, on average $20\mu A$, and low adjusting drop voltage, on average 300 mV. The component advantageously uses a surface assembly package (smd) MSOP10 with very compact dimensions. For generating the reference voltage, a generator ADR421ARM has been selected which is characterized by low output noise, on average $1,75\mu V$ P-P from 0,1 Hz to 10 Hz, low consumption, on average 390 $\mu A$, and great stability, with respect to time and temperature of the generated voltage. The component advantageously uses a surface assembly package (smd) MSOP8 having very compact dimensions.

Buffering the voltage references is carried out by the dual rail-to-rail operational OPA2241 U having low output noise, on average $1\mu V$ P-P from 0.1 Hz to 10 Hz and highly moderate consumptions, on average 25 pA per section.

Block 4

Block 4 is adapted to drive the potential in a common mode and is provided in accordance with the electric diagram seen in figure 11, and comprises a single operational amplifier, various resistors and capacitors. A single rail-to-rail operational OPA24U1 has been selected as amplifier, having low output noise, on average $1\mu$ VP-P from 0.1 Hz to 10 Hz and very moderate consumptions, on average 25 pA.

It comprises a double output regulator LT3023EMSE and a reference voltage generator ADR421 ARM, both of them having low consumptions and an extremely moderate generated noise, especially in the critical range of frequencies between 0,1 and 10 Hz, thus allowing an optimal exploitation of the features of the converter ADS1282 included in the acquisition and pre-processing device integrated in block 2. In order to reduce circuital complexity, dimensions and consumptions, the two voltages adjusted by LT3023EMSE VDD285 = 2,85V and

VAA50 = 5V are shared and used by all the circuital elements, but advantageously for preventing undesired interferences and interactions among the various supplied sections, each line is fractioned with low value resistors, thus achieving indeed a star-like distribution with termination in series, and locally filtered by capacitor arrays. The reference voltages VREF50 = 5V and VREF25 = 2,5V obtained dividing by a resistive divider consisting of the two precision resistors RP11 and RP13 having a low thermal shift coefficient (the former being resistive), are buffered by the dual operational amplifier OPA2241 U; for these two lines as well, the technique of damping and controlling the impedance of the line itself is used by resistors RP14 and RP15.

Block 5

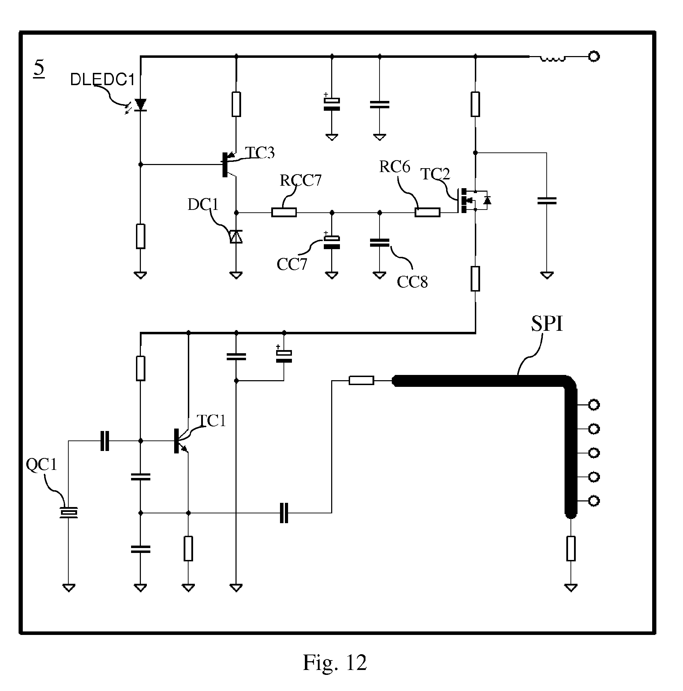

The sinusoidal clock signal is generated in block 5, the electric diagram of which may be seen in figure 12. It comprises two transistors, a mosfet, a led diode, a zener diode, a quartz, various resistors and capacitors. The sinusoidal oscillating function is advantageously served by a transistor through radiofrequency of BFR96 type, having a low noise figure, typically 2,4 dB at 0,5 GHz and a high transition frequency, typically 4,5 GHz. For the adjustment function of the supply voltage, a transistor of BC857A type and a mosfet FDN335N have been chosen and they have advantageously a compact SMD package as the SOT23-3.

The oscillator, based on the Colpitts® topology uses transistor TC1 of the type BFR96. The sinusoidal output at the frequency of 4MHz, imposed by the quartz QC1, is taken by the emitter of TC1 and advantageously distributed by the transmission line to the rest of the device. Another advantage is provided by the architecture of the suggested supply section: the constant current generator consisting of the transistor TC3 of BC857A type and the led DLEDC1, polarizes the zener diode DC1 of BZX84 type under ideal condition, 5,6 V voltage, which acts as a voltage generator. The voltage across the same is filtered by the RC group consisting of RCC7, CC7 and CC8 and applied by RC6 to the gate of the MOSFET TC2 of the FDN335N type which serves the function of regulator element. Due to the use in an oscillating device, the suggested open loop architecture has an extremely low noise and a relative insensibility to the spurious interferences at high frequency produced by the oscillating circuit, indeed due to the lack of a feedback network. The relative lower adjustment stability is not a limit in the suggested oscillating circuit.

Block 17

It is preferred that the power supply 17 is based on a switching technology so as to increase the voltage supplied by the battery itself and obtain an advantageously high energy efficiency during the voltage elevation and adjustment process. The device is intended to be provided with an input for external clock.

The suggested integration advantageously provides the distribution of a single clock signal within the machine, as a pivot element. A further novel element is the kind of the distributed clock signal. In fact, it has been chosen to generate and send the signal in sinusoidal waveform and not as a square wave. These choices advantageously result in a strong reduction of EMI interferences generated by the device by eliminating beats and interferences generated by the presence of several clock signals not related to one another. Another great advantage is the reduction of the jitter present in the clock signal itself, which condition allows to achieve the maximum performance in terms of dynamic range of the conversion system chosen. A very important function is served by blocks 8, 9, 10. In fact, in addition to the required squaring of the signal, these provide for the possible frequency multiplying or dividing of the same needed to satisfy the different requirements, in terms of frequency, of the devices used. This function may be advantageously served on average by the tested PLL technique, so as to obtain multiplied or divided copies of the main frequency, in phase therewith.

The comparison of figures 1a, 1b, 1c and 4 highlights the relevant simplification and optimization of the signal path and therefore the advantages in terms of consumption and dimension reduction and of possible performance increase which is an advantage of the architecture of the suggested device. In particular, it should be noted the choice of keeping the signal in a differential manner along all its path and of converting it, again in a differential manner, by a converter particularly adapted to do so without further analog processing.

The elements and features shown in the various preferred embodiments may be combined without departing from the scope of protection of the present application.

The particular embodiments here described do not limit the content of this application which covers all the variants of the invention defined by the claims.

**Claims**

1. A signal acquisition and conditioning system, specifically for bioelectric signals, comprising an acquisition and pre-conditioning device (2) comprising a chip having:

   - a differential input,
   - an integrated input buffer,
   - a variable gain amplifier (PGA),
   - a high conversion accuracy, delta-sigma type ($\Delta\Sigma$) AD converter with SNR up to 130Db and "no missing codes" resolution of 31 bits,
   the chip being configured to acquire a signal in a differential manner, then amplify it (PGA) and then digitize it ($\Delta\Sigma$).

2. A system according to claim 1, wherein said chip is of the ADS1282 type.

3. A system according to claim 1, wherein said acquisition and pre-conditioning device (2) comprises a clock squarer (B) adapted to receive a clock signal in sinusoidal waveform and adapted to convert it into a clock square wave and multiply it by an appropriate factor.

4. A system according to any one of the preceding claims, comprising a sinusoidal master clock signal generator (5).

5. A system according to any one of the preceding claims, comprising a switching power supply (17) adapted to supply the components included in the signal acquisition and conditioning system; said switching power supply being driven in clock terms by said sinusoidal master clock signal generator (5) by means of squaring means (8) adapted to convert said sinusoidal clock signal into a clock square wave signal and to multiply it by an appropriate factor.

7. A system according to any one of the preceding claims, comprising a DSP or microprocessor (11) adapted to post-condition the acquired signals pre-conditioned by said acquisition and pre-conditioning means (2), said DSP or microprocessor being driven in clock terms by said sinusoidal master clock signal generator (5) by means of squaring means (10) adapted to convert said sinusoidal clock signal into a square wave clock signal and to multiply it by an appropriate factor.

**8.** A system according to claim 7, comprising a wireless-type communication interface (14) adapted to interface the acquisition and conditioning device with an external device; said interface being driven in clock terms by said sinusoidal master clock signal generator (5) by means of squaring means (9) adapted to convert said sinusoidal clock signal into a square wave signal and to multiply it by an appropriate factor.

**9.** A method for implementing a signal acquisition and conditioning system, specifically for bioelectric signals, comprising the use of an ADS1282 type chip or the like, configured to acquire a signal in a differential manner, then amplify it (PGA) and then digitize it ($\Delta\Sigma$).

**10.** A method of generating a driving clock comprising a step of generating a sinusoidal clock signal and then squaring the sinusoidal signal into square wave.

Fig. 1a

Fig. 1b

Fig. 1c

Fig. 2

Fig. 3

Fig. 4

Fig. 5

3

Fig. 6

ADS1282

Fig. 7

Fig. 8

Fig. 9

Fig. 10

Fig. 11

Fig. 12

Europäisches
Patentamt
European
Patent Office
Office européen
des brevets

**EUROPEAN SEARCH REPORT**

Application Number

EP 09 18 0327

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 051 799 A (PAUL ET AL) 24 September 1991 (1991-09-24) * column 3, line 57 - column 4, line 50 * * column 3, lines 19-24 * ----- | 1,5,7,8 | INV. H04B14/04 A61B5/0428 |
| X | DIREK SUEASEENAK ET AL: "Comparison Study of Muscular-Contraction Classification Between Independent Component Analysis and Artificial Neural Network" COMMUNICATIONS AND INFORMATION TECHNOLOGIES, 2008. ISCIT 2008. INTERNATIONAL SYMPOSIUM ON, IEEE, PISCATAWAY, NJ, USA, 21 October 2008 (2008-10-21), pages 468-472, XP031372079 ISBN: 978-1-4244-2335-4 * page 469 * ----- | 1,5,7,8 | |
| X | anonymous: Texas Instruments | 1-5,7-10 | |
| | July 2008 (2008-07), page 1, XP002560410 Retrieved from the Internet: URL:http://www.datasheet4u.com/html/A/D/S/ ADS1282_TexasInstruments.pdf.html [retrieved on 2009-12-14] * pages 1-3; figure 52 * ----- | | TECHNICAL FIELDS SEARCHED (IPC) H04B A61B |

The present search report has been drawn up for all claims

| Place of search | Date of completion of the search | Examiner |
|---|---|---|
| Munich | 27 May 2010 | Martelli, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**            EP 09 18 0327

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2010

| Patent document cited in search report | Publication date | Patent family member(s) | Publication date |
|---|---|---|---|
| US 5051799 A | 24-09-1991 | NONE | |

EPO FORM P0459

For more details about this annex : see Official Journal of the European Patent Office, No. 12/82